(19) Europäisches Patentamt

European Patent Office

Office européen des brevets

(11) **EP 1 499 509 B1**

(12) **FASCICULE DE BREVET EUROPEEN**

(45) Date de publication et mention
de la délivrance du brevet:
**20.09.2006 Bulletin 2006/38**

(51) Int Cl.:
***B60C 23/04*** (2006.01)    ***G01D 7/00*** (2006.01)
***G01D 7/02*** (2006.01)

(21) Numéro de dépôt: 03722481.3

(22) Date de dépôt: **15.04.2003**

(86) Numéro de dépôt international:
**PCT/EP2003/003920**

(87) Numéro de publication internationale:
**WO 2003/086786 (23.10.2003 Gazette 2003/43)**

(54) **INDICATEUR D'ETAT D'UN SYSTEME**

ZUSTANDSMELDER EINES SYSTEMS

SYSTEM STATE INDICATOR

(84) Etats contractants désignés:
**AT BE BG CH CY CZ DE DK EE ES FI FR GB GR
HU IE IT LI LU MC NL PT RO SE SI SK TR**

(30) Priorité: **18.04.2002 FR 0204965**

(43) Date de publication de la demande:
**26.01.2005 Bulletin 2005/04**

(73) Titulaires:
• **Societe de Technologie Michelin
63000 Clermont-Ferrand (FR)**
• **MICHELIN RECHERCHE ET TECHNIQUE S.A.
1763 Granges-Paccot (CH)**

(72) Inventeurs:
• **HOTTEBART, François
Ashikaga-shi,
Tochigi-ken 326-0825 (JP)**

• **SHEPHERD, Russell
F-63170 Perignat-Les-Sarlieves (FR)**
• **BOUIGES, Thierry
F-91190 Gif sur Yvette (FR)**

(74) Mandataire: **Dequire, Philippe Jean-Marie Denis et
al
M.F.P. Michelin,
SGD/LG/PI-F35-Ladoux
63040 Clermont-Ferrand Cedex 09 (FR)**

(56) Documents cités:
**EP-A- 0 672 892**         **WO-A-02/07996**
**CH-A- 685 727**          **US-A- 5 916 298**
**US-A1- 2002 032 513**

## Description

La présente invention concerne le secteur technique des véhicules munis de pneumatiques et des systèmes électroniques embarqués qui les concernent.

Par « véhicules » on entendra dans toute la présente demande, y compris les revendications, aussi bien les véhicules légers (VL), comme les véhicules particuliers ou de tourisme, que les véhicules utilitaires ou les véhicules lourds comme les camions et « poids lourds » (PL), leurs remorques, les véhicules forestiers, les engins de travaux publics, les véhicules militaires ou de secours, et analogues.

Les systèmes électroniques embarqués sur des véhicules deviennent de plus en plus nombreux et performants, et délivrent à l'intention du conducteur de plus en plus de données.

Par ailleurs, il existe de nouveaux développements techniques pour lesquels un affichage de données n'est pas possible à ce jour.

Naturellement, de tels systèmes doivent être compréhensibles par l'ensemble des conducteurs, c'est-à-dire en considérant des conducteurs n'ayant aucune connaissance préétablie du système considéré. Pour atteindre cet objectif (lequel est essentiel pour la commercialisation des équipements considérés), il est impératif que les affichages soient de telle nature que leur sens et leurs indications apparaissent immédiatement à tout conducteur, y compris dans le cas où un système embarqué ne serait mis en oeuvre que très rarement, c'est-à-dire où un conducteur n'aurait aucune chance de mémoriser par un processus de répétition son mode de fonctionnement et d'affichage.

Tel est par exemple, et à titre non limitatif, le cas des systèmes traitant des phénomènes de perte accidentelle de pression (PDP) qui peuvent conduire jusqu'au roulage à plat, pour des véhicules équipés de pneumatiques. Le phénomène de PDP et ultimement de roulage à plat désigne, comme le sait l'homme de métier, le roulage du véhicule sur au moins un pneumatique dont la pression de gonflage devient ou est devenue, pour quelque raison que ce soit, très inférieure à la pression prévue par le manufacturier, c'est-à-dire le cas de roulage où la pression de gonflage s'abaisse anormalement par rapport à la pression nominale d'emploi, dite pression de service, la pression de gonflage pouvant même devenir nulle. La fréquence de tels incidents est très faible et, si l'affichage de données n'est pas .immédiatement compréhensible, le conducteur peut se méprendre totalement sur la signification des données affichées et de leur évolution, ce qui peut réduire à néant l'efficacité du système.

US-A-2002/0032513 décrit un indicateur pour le cas de perte accidentelle de pression correspondant au préambule de la revendication 1.

Un autre problème posé est relatif à l'encombrement des tableaux de bord des véhicules, au fur et à mesure que le nombre et la sophistication des systèmes embarqués augmentent. La surface disponible n'étant pas extensible, ce paramètre impose de mettre au point des systèmes indicateurs aussi compacts que possible, mais qui affichent néanmoins de nombreuses données et de manière immédiatement compréhensible par tout conducteur.

Il serait également très intéressant, pour la même raison, de mettre au point un indicateur qui soit capable d'afficher en mode alternatif plusieurs types de données et dont l'affichage reste immédiatement compréhensible par tout conducteur.

Il serait encore plus intéressant que le système fournisse au conducteur, non seulement des données instantanées, mais également des recommandations de style de conduite visant à tirer le meilleur parti possible du système électronique embarqué.

L'homme de métier aura compris que 1es critères et objectifs ci-dessus sont en grande partie clairement contradictoires, ce qui complique beaucoup toute recherche de solution technique.

On connaît des systèmes capables d'afficher en mode alternatif ou successif (c'est-à-dire que le conducteur fait défiler plusieurs écrans successifs, en général par un bouton poussoir ou analogue) des données relatives par exemple à la vitesse moyenne, la consommation moyenne, le temps de conduite, le kilométrage autorisé compte tenu de la réserve de carburant, etc...

Cependant, ces affichages sont d'un type très simple puisqu'ils se limitent à une seule valeur dont la signification ne peut pas échapper au conducteur.

Ils ne comportent de plus aucune recommandation de conduite. Même dans les systèmes capables de calculer le kilométrage autorisé en fonction de la réserve de carburant, c'est le conducteur qui doit, de manière très approximative, par exemple ralentir s'il veut augmenter son autonomie. Un autre mode de recommandation de conduite, qui semble avoir été abandonné, fut l'« économètre » à trois LED (diodes électroluminescentes) qui indiquait sommairement si le conducteur conduisait d'une manière entraînant une « forte » consommation, une consommation « normale, ou « faible ». Un tel système était par nature extrêmement rudimentaire et peu utile en pratique.

On connaît naturellement aussi des systèmes d'affichage de toutes sortes, comme un cadran sur lequel se déplace une aiguille (tachymètre, voltmètre, température d'eau ou d'huile, etc...), qui n'affichent également que des données brutes et très simples, dont la signification est immédiate mais qui ne peut pas donner de recommandation de conduite au conducteur, ni s'appliquer à des systèmes embarqués complexes faisant intervenir plusieurs paramètres.

Par « système » pour véhicule automobile, on entendra dans ce qui suit un système (ou composant du véhicule) de tout type utile ou nécessaire au fonctionnement et/ou au contrôle dudit véhicule, comme par exemple un réservoir de carburant, une batterie, des pneumatiques, un moteur, et analogues, comportant un « potentiel d'utilisation » (qui est par exemple à un instant t la quantité de carburant présente dans le réservoir, le niveau de charge de la batterie, l'épaisseur de gomme de la bande de roulement du pneumatique, le potentiel maximum d'utilisation d'un système de roulage à plat, la qualité de l'huile de lubrification des organes moteur, pour reprendre les exemples non limitatifs ci-dessus), et présentant au même instant **t** une « autonomie d'usage » (qui est, pour reprendre les exemples non limitatifs ci-dessus, l'autonomie du véhicule en km compte tenu de la réserve de carburant, la durée de vie utile de la batterie par exemple en cas de panne de l'alternateur, la durée de vie du pneumatique en fonction de l'épaisseur de gomme restante, le nombre de km pouvant être parcourus avant la prochaine vidange, etc...).

La présente invention concerne un indicateur d'état d'un système notamment pour tableau de bord d'un véhicule. Le système a un potentiel d'utilisation donné et comporte des moyens d'évaluation tels que, sur la base de mesures liées aux conditions d'usage du véhicule et/ou aux caractéristiques physiques du système et/ou du véhicule et/ou aux conditions d'environnement du véhicule, ces moyens d'évaluation calculent à un instant **t** des paramètres caractéristiques de l'état du système. L'indicateur d'état selon l'invention est caractérisé en ce qu'il affiche simultanément audit instant **t** au moins trois paramètres différents caractéristiques de l'état dudit système et de son autonomie.

Ces trois paramètres peuvent être choisis parmi l'autonomie d'usage, les valeurs maximale et minimale de l'autonomie d'usage, le potentiel d'utilisation et une grandeur C liée à, ou représentative de, la sévérité des paramètres d'utilisation dudit système audit instant donné **t.**

Selon un premier mode de réalisation de l'indicateur d'état, les moyens d'évaluation et d'affichage calculent et affichent simultanément :

- le potentiel d'utilisation dudit système audit instant **t** donné ;
- l'autonomie d'usage dudit système audit instant **t** donné ; et
- une grandeur C liée à la sévérité des paramètres d'utilisation dudit système audit instant **t** donné.

L'affichage de la grandeur C liée à la sévérité des conditions d'usage du système, en complément du potentiel d'utilisation et de l'autonomie d'usage, permet au conducteur de connaître et de suivre un paramètre qui rend compte de l'influence de sa conduite sur l'état du système. Il peut ainsi adapter sa conduite pour obtenir l'autonomie d'usage qui lui est nécessaire.

De préférence, le potentiel ainsi que la grandeur C sont affichées graphiquement.

A titre d'exemple, le potentiel peut être représenté par une zone A de couleur donnée dont la surface est représentative de sa valeur. Au fur et à mesure de la consommation de ce potentiel, la zone A se réduit.

La zone A peut aussi être séparée en deux zones A1 et A2 dont les surfaces respectives sont fonction de la valeur de la grandeur C.

On peut aussi ajouter numériquement la valeur de cette grandeur C.

Selon un second mode de réalisation, les moyens d'évaluation et d'affichage calculent et affichent simultanément :

- le potentiel d'utilisation dudit système audit instant **t** donné ; et
- les valeurs maximale et minimale possibles de l'autonomie d'usage dudit système audit instant **t** donné.

La connaissance du potentiel donne au conducteur une information simple sur l'état du système considéré. Les valeurs maximale et minimale possibles de l'autonomie d'usage du système complètent cette information et lui permettent d'être en permanence suffisamment informé des possibilités du système et ainsi de son véhicule.

Selon un troisième mode préférentiel, les moyens d'évaluation et d'affichage calculent et affichent simultanément :

- l'autonomie d'usage dudit système audit instant **t** donné ; et
- les valeurs maximale et minimale possibles de l'autonomie d'usage dudit système audit instant **t** donné.

Ce troisième mode de réalisation d'un indicateur d'état donne au conducteur une information complète sur les possibilités du système considéré. Cette information est très synthétique et est aisément comprise par le conducteur. En particulier, il peut suivre les conséquences de ses choix de conduite et les adapter à ses besoins.

De préférence, les valeurs d'autonomie d'usage actuelle ainsi que maximale et minimale possibles sont repérées graphiquement sur une plage graduée.

La valeur de l'autonomie d'usage actuelle peut être repérée par un index.

Avantageusement, la zone de la plage graduée située entre les valeurs maximale et minimale possibles de l'autonomie d'usage est identifiée par une couleur donnée différente du fond de ladite plage.

Les valeurs maximale et minimale possibles de l'autonomie d'usage à l'instant **t** peuvent avantageusement être les bornes minimale et maximale de ladite plage graduée.

La plage graduée peut aussi avoir une échelle logarithmique de valeurs. Cela a l'avantage de focaliser l'attention du conducteur sur les faibles valeurs en fin de vie du système.

On peut aussi, bien entendu, ajouter un affichage numérique de la valeur du potentiel d'utilisation du système ainsi que de la grandeur C représentative de la sévérité des paramètres d'utilisation du système à **t**.

De façon complémentaire, l'indicateur d'état selon l'invention peut aussi comporter des moyens pour :

- enregistrer l'autonomie d'usage souhaitée par le conducteur à un instant donné ; et
- mettre à jour cette autonomie d'usage souhaitée par le conducteur par déduction des distances effectivement parcourues ou du temps d'usage effectif, selon le cas.

De préférence, les moyens d'évaluation et d'affichage comparent l'autonomie souhaitée et l'autonomie calculée, et transforment ces données en un affichage recommandant au conducteur la démarche à adopter pour retrouver une autonomie d'usage calculée suffisante.

L'homme de métier sait que cette « autonomie d'usage » est fonction du mode de conduite adopté par le conducteur. L'autonomie d'usage au temps **t** reflète la valeur actuelle de cette autonomie, qui résulte du mode de conduite passé. Il est évident que, pour ce qui concerne le futur, l'autonomie d'usage sera affectée par le mode de conduite qui sera adopté. L'invention a ainsi l'avantage d'intégrer ce paramètre dans l'indicateur d'état : cette intervention du paramètre « mode de conduite » présente le grand intérêt de permettre la définition, à un instant **t**, de l'autonomie d'usage MINIMALE (en cas de mode de conduite brutal) et de l'autonomie d'usage MAXIMALE (en cas de mode de conduite souple). L'invention permet donc pour la première fois une information directe de l'autonomie d'usage ET une information sur les minimum et maximum accessibles, et donc une recommandation explicite de mode de conduite pour le conducteur.

L'homme de métier comprendra que la définition des autonomies d'usage maximale et minimale à l'instant **t** sera obtenue par des moyens de mesure des paramètres de conduite du véhicule (vitesse instantanée ou moyenne, consommation instantanée ou moyenne, autonomie carburant instantanée, capteur de pression interne du pneumatique, capteur de température interne du pneumatique, voltmètre, ampèremètre, température eau et huile moteur, données moteur telles que cylindrée, etc...), de mesures liées aux conditions ou paramètres d'usage dudit véhicule et/ou aux caractéristiques physiques dudit système et/ou dudit véhicule et/ou de l'état dudit véhicule et /ou aux conditions d'environnement dudit véhicule (température, pluie, ....), et de calcul et évaluation par des algorithmes appropriés. Ces moyens seront soit déjà présents sur le véhicule au titre de l'électronique embarquée et des moyens de contrôle embarqués qui sont de plus en plus nombreux et même banalisés, comme ABS ESC (contrôle de trajectoire), anti-patinage, système de roulage à plat tel le PAX System et capteurs et électronique associés, etc... soit seront développés spécialement. Ces moyens sont à la portée de tout homme de métier spécialisé dans les secteurs techniques considérés ci-dessus, par exemple ingénieur motoriste, spécialiste en électronique embarquée, traitement informatique de données, et spécialisations analogues qui sont aujourd'hui courantes dans le secteur de l'industrie automobile.

C'est l'ensemble de ces moyens qui est désigné par « moyens d'évaluation ».

Dans une application préférentielle, le système considéré est un système de roulage à plat comprenant au moins pour chaque roue une enveloppe pneumatique, un avertisseur de dégonflement et des moyens de support de la bande de roulement de l'enveloppe pneumatique en cas de dégonflement de l'enveloppe de pneumatique. Ces moyens de support peuvent être disposés dans la structure de l'enveloppe de pneumatique ; on parle alors de pneumatique « auto-porteur », c'est-à-dire que ce type de pneumatique peut continuer à rouler à pression de gonflage nulle pendant une distance donnée en respectant une vitesse maximale donnée. Les moyens de support peuvent aussi être constitués d'un appui de sécurité destiné à être disposé autour de la jante du pneumatique, radialement extérieurement, pour pouvoir supporter la bande de roulement en cas de perte de pression importante. Un exemple d'un tel système de roulage à plat avec un appui de sécurité est le système PAX de Michelin.

Dans ce cas, avantageusement, la grandeur C, représentative de la sévérité des conditions d'usage actuelles dudit système, est la température de l'air interne de ladite enveloppe pneumatique.

La demande de brevet WO 02/07996 présente un exemple de calcul concret de l'estimation de l'autonomie d'un système de roulage à plat.

Ce procédé est tel que, à partir du moment où l'avertisseur de dégonflement a détecté un seuil de dégonflement prédéterminé :

- on mesure périodiquement la distance parcourue et un paramètre C(t) caractéristique des conditions du roulage ;
- on détermine en fonction de C(t) et de la distance mesurée sur Δt une grandeur caractéristique d'un endommagement élémentaire potentiel du système pendant la période écoulée Δt ;
- on calcule une estimation de l'endommagement global par combinaison des endommagements élémentaires calculés depuis le début du roulage à plat ; et
- on transmet au conducteur du véhicule une grandeur liée à cette estimation de l'endommagement global du système de roulage à plat.

Selon un mode de mise en oeuvre particulier, à partir d'une série d'essais de roulage dans des conditions correspondant à celles du paramètre caractéristique C, on détermine une fonction donnant pour toute valeur du paramètre C une estimation e de l'autonomie du système de roulage à plat neuf dans ces conditions de roulage. A titre d'exemple, on peut utiliser la fonction suivante :

$$e(t) = e_0^{'}(T_0 - T) + e_1^{'}$$

où :

• e est l'autonomie modélisée, exprimée en kilomètres, qui correspond à l'autonomie disponible avant immobilisation d'un système de roulage à plat roulant à une température T constante ;
• T est la température de l'air interne (en degrés Celsius) ;
• $T_0$ est une température arbitraire de référence (en degrés Celsius) ;
• $e_0^{'}$ est la pente de la relation linéaire entre l'autonomie et $(T_0 - T)$, écart entre température maximale et température mesurée de l'air interne ;
• $e_1^{'}$ est l'autonomie estimée à la température $T_0$.

L'endommagement élémentaire potentiel ΔJ pendant la période de roulage Δt peut être estimé par le rapport :

$$\Delta J = \Delta d/e(t)$$

dans lequel, Δd est égal à la distance parcourue par le véhicule pendant la période Δt.

En considérant J, potentiel d'utilisation du système de roulage à plat, à chaque période de mesure Δt, on actualise l'estimation de J(t) par :

$$J(t) = J(t-\Delta t) - \Delta J$$

L'estimation de E, autonomie restante peut alors être estimée par :

$$E = J(t) \times e(t)$$

Les valeurs minimale et maximale de l'autonomie d'usage à l'instant **t** peuvent alors être très aisément déterminées en prenant en compte les valeurs maximale et minimale de la valeur caractéristique choisie, par exemple, comme dans l'exemple précédent, la valeur de la température de l'air de la cavité interne de l'enveloppe pneumatique. La valeur maximale admissible est alors $T_0$. La valeur minimale, la valeur de la température ambiante ou une autre valeur arbitraire, comme 20 degrés Celsius.

L'invention a aussi pour objet un système embarqué de contrôle et de préconisation tel qu'il utilise un indicateur d'état selon l'invention commandé par des moyens électroniques de mémoire et de circuits logiques, notamment un ou des algorithmes, alimentés par des informations provenant de capteurs appropriés.

Le système selon l'invention est avantageusement tel qu'il comporte un écran capable d'afficher successivement au moins deux « modes » c'est-à-dire au moins deux systèmes d'affichage différents relatifs à des fonctionnalités différentes, choisies parmi le mode « autonomie carburant », « autonomie usure des pneumatiques », « autonomie système de roulage à plat », « autonomie avant révision », « autonomie batterie » et analogue, avec une fonction d'affichage prioritaire du mode défaillant, l'affichage successif étant commandé au moins partiellement par un moyen de commande activé par le conducteur ou au moins partiellement piloté automatiquement par le système logique et sa mémoire.

L'avantage d'un tel système est d'utiliser pour des fonctionnalités différentes le même mode d'affichage ce qui permet à l'usager de bien le connaître et le comprendre. Ainsi, lorsqu'une défaillance, par exemple de l'un des pneumatiques, intervient et que le système de roulage à plat du pneumatique concerné est mis en oeuvre, l'usager va immédiatement comprendre et appliquer les préconisations transmises par l'indicateur.

D'autres caractéristiques et avantages de l'invention seront mieux compris à la lecture de la description qui va suivre, et en se référant au dessin annexé sur lequel :

- les figures 1A et 1B présentent un premier mode de réalisation d'un indicateur d'état selon l'invention ;
- les figures 2A et 2B représentent une alternative graphique au premier mode précédent ;
- les figures 3A et 3B présentent un second mode de réalisation d'un indicateur d'état selon l'invention ;
- les figures 4A à 4H représentent un indicateur d'état présentant l'ensemble des paramètres d'autonomie et de recommandations de conduite; et
- la figure 5 présente une alternative à l'indicateur de la figure 3.

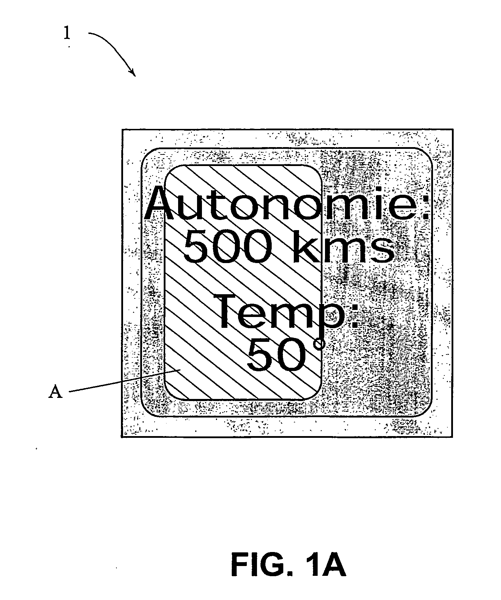

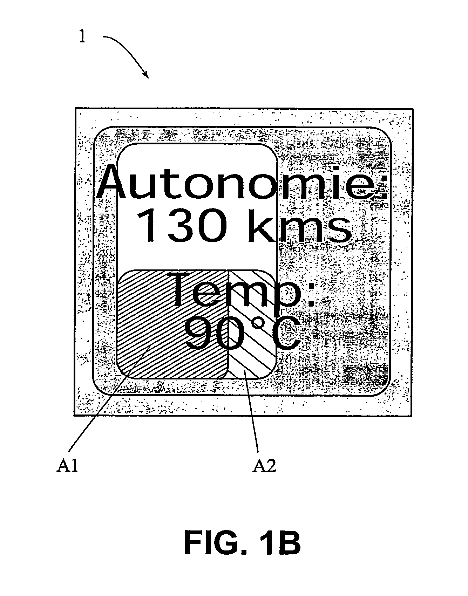

La figure 1, qui se compose des figures 1A, et 1B, représente un écran 1 non limitatif d'affichage selon l'invention, adapté pour afficher la température d'un pneumatique en condition de PDP ou de roulage à plat ainsi que l'autonomie restante, c'est-à-dire le nombre de kilomètres que le conducteur, à l'instant **t** et dans les conditions de conduite de cet instant, peut parcourir sans endommager ou dégrader gravement le pneumatique. Un tel affichage s'applique tout particulièrement au système PAX.

On rappellera brièvement que le système PAX est essentiellement constitué d'un « appui » en matériau de type vulcanisat ou analogue, monté sur un profil de jante particulier. Lors de la défaillance d'un pneumatique, le véhicule peut continuer à rouler sur ledit «appui», lequel interdit l'endommagement des flancs du pneumatique et notamment leur cisaillement. Pour des raisons d'échauffement et analogues, bien connues des spécialistes du roulage à plat, il convient de limiter la vitesse du véhicule.

Ce système est maintenant bien connu et l'homme de métier pourra se référer pour plus de détail soit aux documents commerciaux soit comme précédemment indiqué à la demande de brevet WO 02/07996 ; on trouvera notamment dans ce brevet un mode de calcul de l'estimation de l'autonomie du système de roulage à plat, que l'on peut utiliser dans l'algorithme de calcul du système de la présente invention.

Le système PAX est donc un exemple très représentatif d'un système complexe, influant sur le maintien de la sécurité, disposant au temps zéro d'un potentiel d'utilisation, autorisant une certaine autonomie d'usage dans certaines limites de conditions de conduite, et qui peut s'avérer peu efficace ou même inopérant si le conducteur n'est pas informé des conditions de conduite à adopter, de son autonomie, et de l'influence de l'un de ces paramètres sur l'autre. C'est également un excellent exemple de système dont l'importance est cruciale lorsque les circonstances font qu'il est mis en oeuvre, mais qui, avec les pneumatiques modernes, ne sera mis en oeuvre que très rarement : il s'agit donc d'un exemple très représentatif du cas où l'information doit être immédiatement compréhensible par tout conducteur, même si ledit conducteur a oublié de consulter le manuel d'utilisation, ou bien en a oublié le contenu.

Sur l'exemple non limitatif représenté sur la figure 1, dit « jauge réservoir » on voit que l'autonomie en fonctionnement d'un système PAX est représentée au temps zéro par une vaste zone A à gauche de l'écran, dont la coloration peut être par exemple verte (synonyme de sécurité et donc de conditions satisfaisantes). Cette zone représente le potentiel d'utilisation du système PAX. Tout au long de l'utilisation du système PAX en conditions de roulage à plat, cette zone A va diminuer et ainsi indiquer au conducteur l'état actuel du système. On peut ajouter une graduation par exemple relative de 100 à 0 de ce potentiel.

Sur l'écran 1 est aussi affiché numériquement l'autonomie, ici 500 km, au début du roulage à plat. On peut aussi ajouter numériquement la valeur de la température de l'air interne du pneumatique, ici 50 degrés Celsius. Cette température est en effet une grandeur caractéristique de la sévérité des conditions d'usage du système.

Sur la figure 1B, après un certain temps de roulage à plat, on constate que la zone A a fortement diminuée de hauteur, et correspond maintenant sensiblement à un potentiel de 45%. L'autonomie calculée en fonction du potentiel et de la température comme précédemment indiqué est alors de 130 kms. On voit aussi que la zone A est dédoublée en deux zones A1 et A2 en fonction de la valeur de la température de la cavité de l'air interne. La température est ici de 90 degrés Celsius, ce qui correspond à des conditions relativement pénalisantes d'usage du système et pour clairement l'indiquer au conducteur, on peut colorer en rouge la zone A1 dont la superficie va augmenter avec l'augmentation de la température.

Le fonctionnement en est le suivant : au déclenchement du système PAX, détecté par un capteur de pression du pneumatique, qui envoie un signal à l'électronique embarquée, celle ci fait que l'écran affiche le potentiel et l'autonomie optimale initiale du système PAX, par exemple 500 km, sous la forme d'une zone verte intégrale, ainsi que la température du pneumatique à ce moment, par exemple 50 °C (figure 1A) ; puis le pneumatique s'échauffe progressivement, et un capteur de température du pneumatique alimente ladite électronique, dont l'algorithme calcule (comme précédemment indiqué) le potentiel et l'autonomie restants à l'instant **t**. Sur l'écran, l'algorithme crée et diminue progressivement la hauteur et la surface de la zone A - potentiel du système - tandis que la surface de la zone A1 relativement à celle de la zone A2 correspond à la température mesurée. Le conducteur comprend donc intuitivement la «menace» qui est que le paramètre à surveiller (la température) prend trop d'importance, que son autonomie diminue en conséquence, et qu'il doit donc réduire sa vitesse pour abaisser la température (la zone rouge va diminuer) et conserver une autonomie acceptable. Naturellement, les valeurs numériques sont affichées en temps réel, par exemple chaque minute.

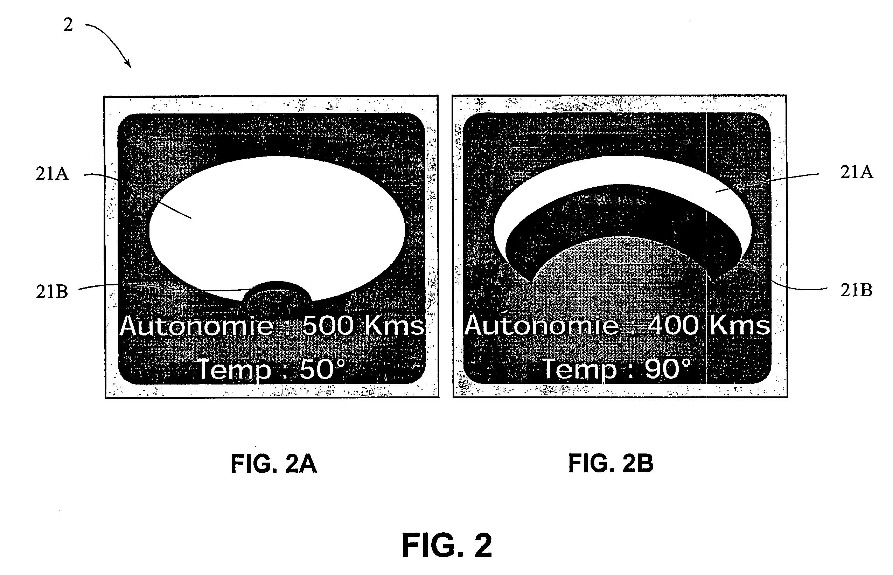

La figure 2, qui se compose des figures 2A, et 2B, représente une variante 2 de l'indicateur d'état de la figure 1, destinée à illustrer le fait que l'homme de métier pourra facilement concevoir des écrans visuellement différents à partir de l'exemple de la figure 1, sans pour autant sortir du cadre de l'invention. On voit ici que la valeur du potentiel est donnée par la diminution progressive d'une zone elliptique 21 blanche 21A et grise foncé 21B ; parallèlement, une indication visuelle de la température, grandeur caractéristique dans l'exemple choisi de la sévérité des conditions d'usage, est donnée par la taille d'une zone grise foncé 21B relativement à celle de la zone elliptique 21 du potentiel. On voit à la figure 2B que la zone grise foncé 21B s'étend sur plus de la moitié de la zone elliptique 21 ce qui indique une température de fonctionnement sévère. On peut aussi, comme précédemment afficher numériquement en surimpression la valeur de l'autonomie d'usage à l'instant **t** du système ainsi que la valeur de la température. Dans ces deux figures, les valeurs numériques sont identiques aux précédentes.

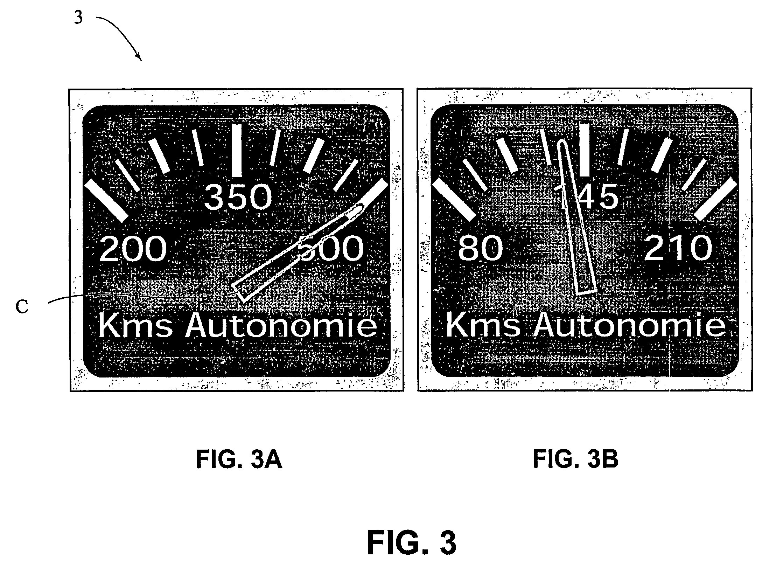

La figure 3, qui se compose des figures 3A, et 3B, représente un écran 3 non limitatif d'affichage selon l'invention, adapté pour afficher comme paramètres caractéristiques de l'état d'un système et de son autonomie la plage d'autonomie, dont les deux bornes minimale et maximale varient en temps réel, et une aiguille C représentative de l'autonomie actuelle. Cette figure correspond encore au cas d'un système de roulage à plat tel un système PAX.

On voit que sur la figure 3A, la plage d'autonomie est de 200 à 500 km, avec la valeur de l'autonomie actuelle égale au maximum soit 500 km. Cette figure correspond, comme précédemment au début du roulage à plat.

Sur la figure 3B, après un certain temps de roulage à plat, la plage d'autonomie possible est comprise entre 80 et 210 kms et l'autonomie actuelle dans les conditions d'usage actuelles est de 130 kms. La valeur de cette autonomie est repérée par l'aiguille C. On peut aussi l'ajouter numériquement en surimpression pour faciliter la compréhension du conducteur. La valeur de la température est ici remplacée par l'affichage des valeurs d'autonomie minimale et maximale possibles calculées par les moyens d'évaluation du système. Ces valeurs sont très intéressantes pour le conducteur qui comprend immédiatement quel trajet lui est accessible dans ses conditions de roulage actuelles ainsi que ce qu'il doit faire pour augmenter cette autonomie si nécessaire.

A titre d'option, on peut également afficher un message alphanumérique en surimpression ou un pictogramme d'alerte de fin de vie du pneumatique c'est-à-dire d'approche de la fin d'autonomie.

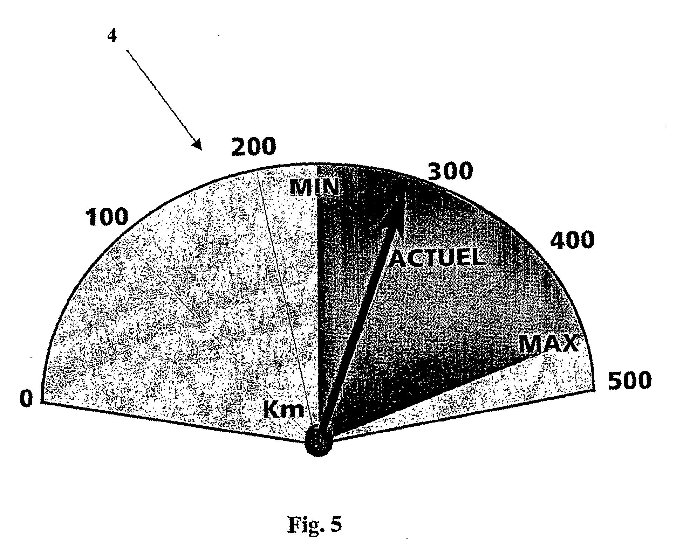

La figure 5 présente un mode de réalisation proche de celui de la figure 3. Dans l'écran 4 de la figure 5, les bornes de la plage d'autonomie sont fixes et égales à 0, d'un côté et à 500 km de l'autre. 500 km étant, bien entendu la valeur maximale de l'autonomie initiale du système.

L'indication des valeurs à t des autonomies maximale et minimale est alors donnée par une plage de couleur plus foncée que le reste de l'écran. Cette plage de couleur foncée évolue en fonction des données reçues des moyens d'évaluation du système. La valeur de l'autonomie actuelle est donnée par une aiguille. Elle peut aussi être confirmée par un affichage numérique en surimpression.

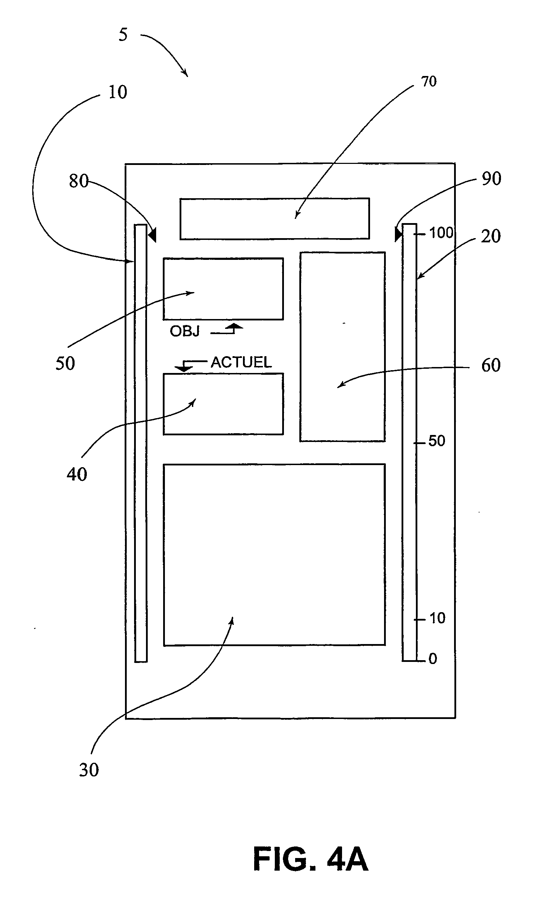

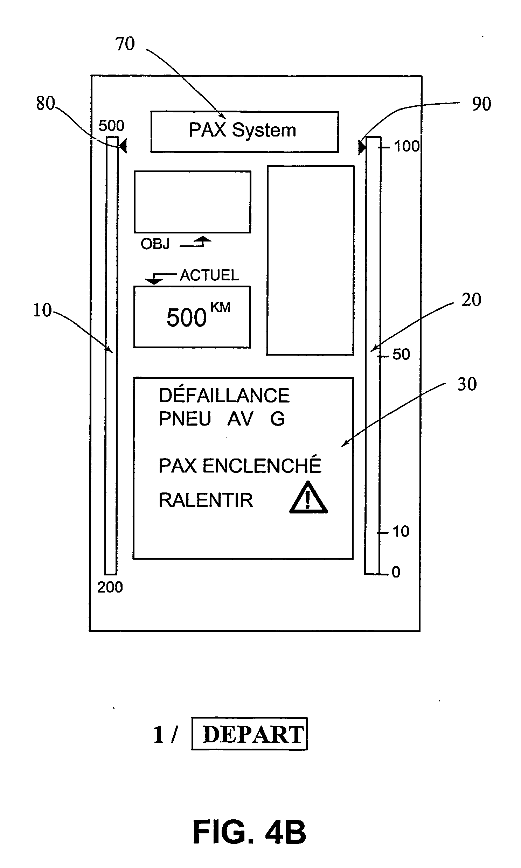

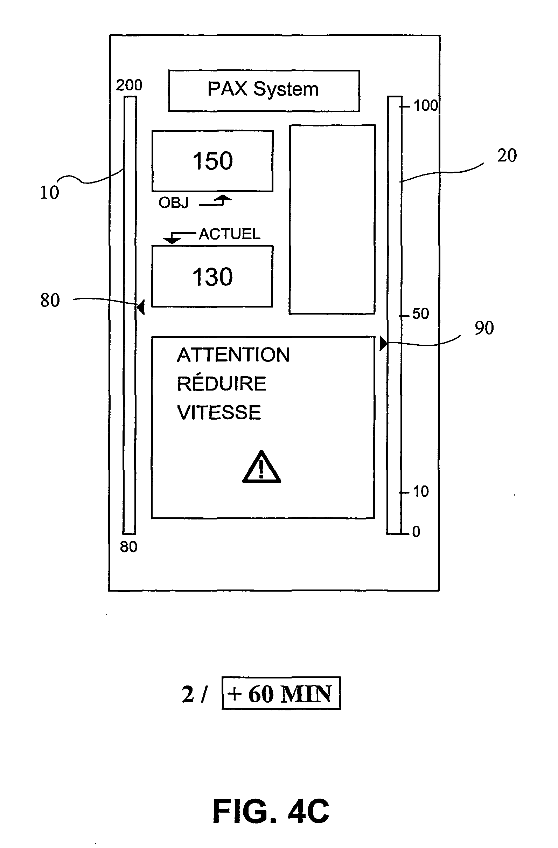

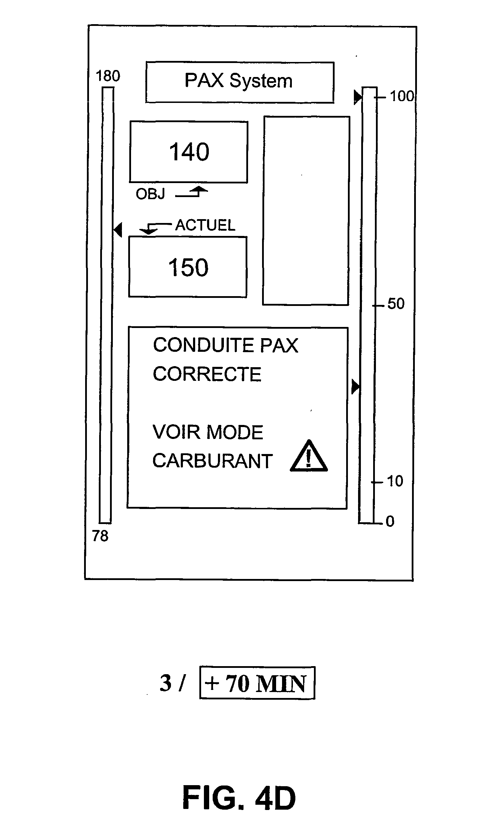

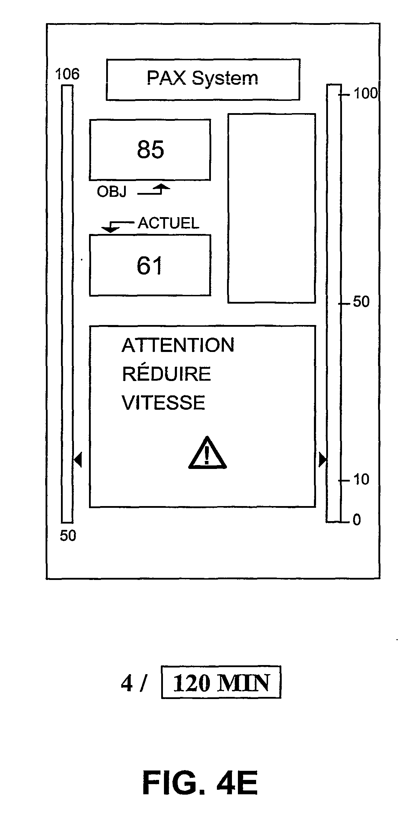

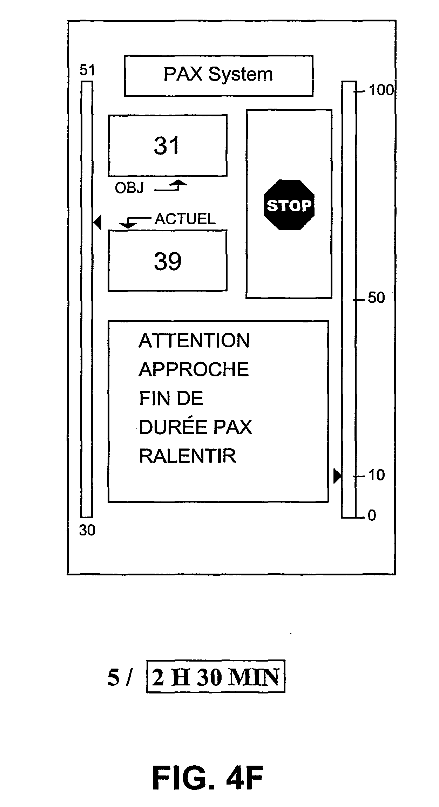

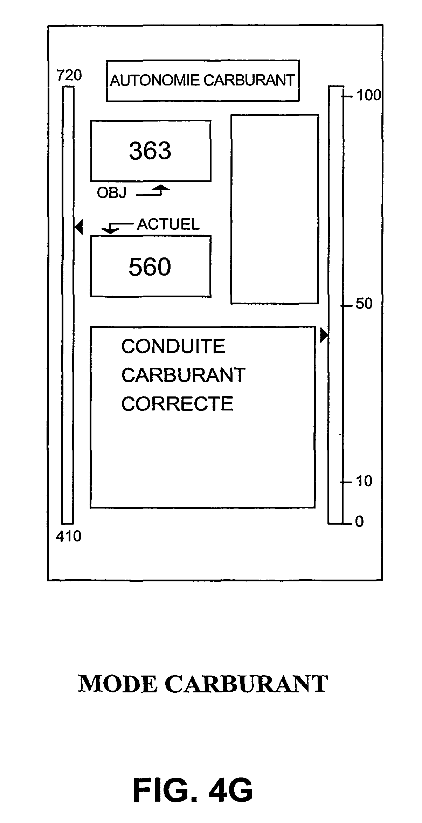

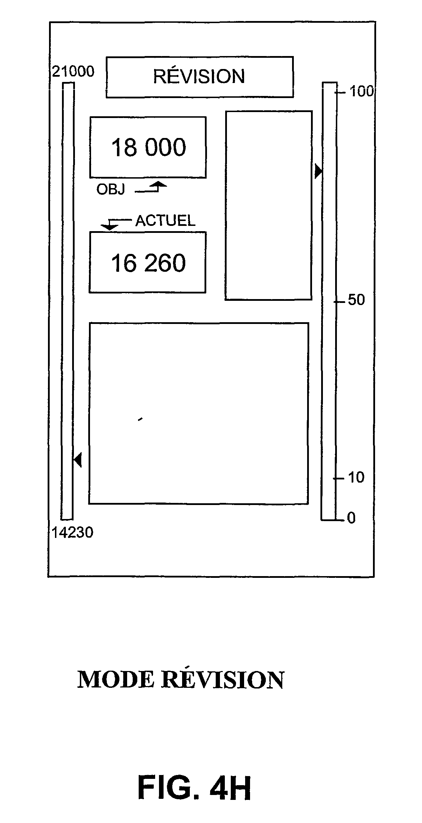

La figure 4, qui se compose des figures 4A à 4H, représente un écran 5 non limitatif d'affichage selon l'invention, adapté pour afficher de manière très claire l'ensemble des paramètres d'autonomie, et de recommandations de conduite.

La figure 4A représente le schéma général de l'écran, qui comporte une zone d'affichage graphique 10 à gauche des paramètres d'autonomie du système, une zone d'affichage graphique 20 à droite du « potentiel du système », une zone message 30, une zone 40 d'affichage de l'autonomie en clair et une zone 50 d'objectif à atteindre en terme d'autonomie, ainsi qu'une zone 60 de message ou pictogramme d'alerte en fin d'autonomie. On a également prévu une zone 70 de « mode d'affichage » que l'on aurait pu également prévoir pour les exemples non limitatifs représentés sur les figures 1 à 3 et 5, et dont le fonctionnement sera décrit ci-après.

En mode normal, cet écran peut afficher « mode normal » dans la zone 70 et afficher par exemple une moyenne de vitesse dans la zone 40, un temps de conduite dans la zone 50, un pictogramme « OK » dans la zone 60, et l'heure, la pression ou température d'huile, la consommation moyenne etc... dans l'écran 30 réservé aux messages. Ce cas normal n'a pas été représenté car il est aisément compréhensible.

On comprendra que les données essentielles telles que la vitesse instantanée, que le conducteur doit pouvoir consulter à tout moment, figurent sur un écran non représenté.

L'écran de la figure représente un écran du type ordinateur de bord, dont les fonctions sont appelées volontairement par le conducteur, ou bien s'affichent automatiquement en cas de défaillance d'un organe du véhicule.

On comprendra aussi que l'on peut envisager d'ajouter des zones dans l'écran de la figure 4A, destinées à ces données essentielles, ces zones subsistant dans tous les modes d'affichage qui seront décrits ci-dessous. Cette solution est moins préférée car le conducteur risque par exemple d'oublier de surveiller sa vitesse si celle ci est « noyée » au milieu de messages différents.

Sur les figures 4B à 4F, on a représenté un mode de fonctionnement en mode de roulage à plat d'un système PAX.

Sur la figure 4B, l'écran « normal » évoqué plus haut est automatiquement remplacé par l'écran représenté sur ladite figure 4B, et qui alerte le conducteur sur une défaillance d'un pneumatique et l'activation du système PAX.

On voit que la zone 70 affiche « PAX System ». La zone message 30 précise la défaillance et indique en clair au conducteur de ralentir.

L'autonomie « initiale » du PAX (donnée du manufacturier préenregistrée) s'affiche automatiquement (ici, 500 km) de même que la plage d'autonomie 200 - 500 sur 1a zone 10 à gauche. A ce temps t=0 initial, l'indice 80 du curseur de la zone 10 est positionné en haut de la zone et indique que l'autonomie actuelle correspond à l'autonomie maximale du système PAX. Cette zone d'affichage de l'autonomie correspond tout à fait dans son fonctionnement à l'écran 3 proposé à la figure 3. Le curseur 90 de la zone 20 à droite indique que le potentiel du système est égal à 100 %.

La zone pictogramme 60 ainsi que la zone objectif 50 restent vides.

Sur la figure 4C, qui correspond à un temps arbitraire t = 60 min, on voit que le conducteur a introduit une donnée d'objectif dans la zone 50 ; par exemple, il a introduit rapidement un objectif de, par exemple 220 km dont il sait qu'il lui permettra d'atteindre tel garage et, au terme de 60 minutes, l'objectif a été évidemment ramené à 150 km puisque le véhicule s'est rapproché de son objectif. L'objectif est actualisé en temps réel par l'électronique de bord en fonction de l'objectif entré par le conducteur et du kilométrage parcouru.

L'entrée de l'objectif peut se faire par exemple par un clavier d'autoradio, ou par le clavier de l'ordinateur de bord, ou par entrée vocale etc...

On pourra également entrer l'objectif à partir des données de positionnement par satellite GPS ou de tout autre système de positionnement, l'entrée pouvant alors être automatisée par un simple clic sur la ville de destination.

Tout cela est à la portée immédiate de tout homme du métier spécialiste des systèmes embarqués de ce type.

La zone d'affichage de l'autonomie 10 indique alors comme valeur maximale de l'autonomie 200 km et minimale 80. L'autonomie actuelle est repérée par le curseur 80 à 130 kms. Elle est aussi affichée numériquement dans la zone 40. Le curseur 90 de la zone potentiel 20 indique un potentiel restant de l'ordre de 45% du système.

On voit sur la figure 4C que l'objectif (actualisé comme indiqué ci-dessus) est ramené à 150 km, mais que l'autonomie actualisée est tombée à 130 km. Comme indiqué plus haut, cette actualisation de l'autonomie est réalisée par l'électronique embarquée alimentée notamment par un capteur de température du pneumatique, éventuellement de pression, un capteur de vitesse du véhicule, voire un accéléromètre permettant de distinguer un mode de conduite « doux » d'un mode de conduite « agressif », le second ne pouvant que contribuer à réduire l'autonomie. Ces signaux sont intégrés dans un algorithme approprié, l'ensemble étant à la portée de tout homme de métier.

Le défaut d'autonomie du système relativement à l'objectif actualisé du conducteur est signalé par un message d'alerte dans la zone 30, éventuellement doublé d'un signal sonore.

Divers types de messages sont possibles, l'un d'entre eux pouvant clairement suggérer au conducteur de réduire sa vitesse.

Sur la figure 4D, à t = 70 min, 1e conducteur a obéit à l'avertissement de la figure 4C et a fortement ralenti ou adouci sa conduite. L'électronique a enregistré la variation favorable de la température du pneumatique, par exemple, et a calculé une nouvelle autonomie. Celle ci est remontée à 150 km tandis que l'objectif se rapprochait (140 km). L'objectif peut donc être atteint et le message affiche « conduite PAX correcte ». La position du curseur 80 de la zone 10 est remontée, ce qui confirme bien que les conditions d'usage du système sont sensiblement moins sévères.

Cependant, le niveau de carburant est tombé à une valeur limite. La plage message 30 indique donc au conducteur de surveiller sa jauge. Le conducteur peut alors, par l'une des commandes de l'ordinateur de bord, faire défiler les « modes » dans la fenêtre 70 jusqu'au mode « carburant » (cf. fig. 4G). Il peut ensuite revenir de la même façon au mode « PAX ».

L'information concernant le carburant alors que le mode PAX est affiché est un exemple non limitatif montrant l'extrême flexibilité du système, à titre naturellement non limitatif.

Sur la fig. 4E, t = 120 mn, on a supposé que le conducteur a de nouveau trop accéléré. Certes, l'objectif s'est rapproché à 85 km, mais l'autonomie est tombée à une valeur insuffisante pour l'atteindre, 61 km. Le système affiche de nouveau un message suggérant de réduire la vitesse. Le curseur 80 est de nouveau très bas pour indiquer que les conditions d'usage sont très, trop sévères.

On voit que, naturellement, sur chaque figure, la plage d'autonomie (valeurs bornes de la zone 10) évolue. De même sur cette figure 4E, le curseur de la zone 20 indique que le potentiel restant du système est très bas, proche de zéro.

Sur la figure 4F, t =150 min, le conducteur a de nouveau ralenti. Avec une autonomie de 39 km, il pourra atteindre son objectif qui s'est rapproché à 31 km.

Cependant, on a prévu (donnée préenregistrée) d'avertir le conducteur lorsque l'autonomie ou le potentiel tombent à des valeurs inférieures à un certain seuil, c'est-à-dire à un moment où le conducteur DOIT trouver rapidement un garage. Si cette limite est de par exemple 40 km, et que l'autonomie descende au-dessous de cette limite, un pictogramme d'alerte apparaît dans la zone 60 ainsi, de préférence, qu'un message en clair dans la zone 30 (et ceci bien que l'autonomie soit correcte ; il s'agit d'un avertissement indépendant).

Naturellement, les exemples ci-dessus sont tous non limitatifs. L'homme de métier comprendra qu'il est impossible de décrire toutes les options ou variantes possibles. Les zones peuvent être placées différemment, être de forme ou de dimensions respectives différentes, les couleurs peuvent être choisies à volonté, on peut éventuellement supprimer certaines zones, par exemple le pictogramme, ou au contraire en ajouter.

On aurait pu par exemple sur la figure 4 faire figurer la température du pneumatique soit dans une zone séparée, soit en permanence dans la zone message.

La figure 4G représente le même écran en mode « carburant ». On retrouve les mêmes types d'affichage (autonomie réelle et plages d'autonomie, potentiel restant, objectif, etc...). En cas d'autonomie insuffisante, des messages d'alerte ou des pictogrammes s'afficheraient.

La fig. 4 H représente encore un autre mode d'affichage, qui est le mode « révision ». La norme (objectif) est de faire réviser le véhicule à 18000 km (norme constructeur). Cependant, les conditions d'usage du véhicule sont plus sévères que celles prévues par le constructeur et le système calcule que, si ces conditions de conduites sont maintenues, la révision devra avoir lieu à 16260 et non 18000. On voit à nouveau tout l'intérêt pour le conducteur d'un indicateur d'état donnant les valeurs de plages d'autonomie ainsi que l'autonomie actuelle du système. En particulier, lorsque les conditions d'usage sont très douces, le conducteur peut sans risque faire réaliser sa révision à des valeurs très notablement supérieures à celles (moyennes) prévues par le constructeur. Ici, à titre d'exemple, le choix de conditions de conduite moins pénalisantes peut conduite à n'effectuer la révision qu'à 21000 km.

Il est également possible d'utiliser le même principe et les mêmes moyens de calcul et d'affichage pour surveiller l'usure des pneumatiques et aviser le conducteur de leur limite d'utilisation.

De manière générale, les moyens d'affichage et les systèmes électroniques ou systèmes embarqués selon l'invention peuvent être utilisés pour surveiller en temps réel toute fonction du véhicule, ou tout organe du véhicule, dont l'évolution varie en fonction (généralement inverse) des conditions de conduite adoptées par le conducteur. Il pourra s'agir soit de surveillance de routine (carburant) soit de surveillance de circonstances accidentelles (crevaison et mise en oeuvre du PAX System par exemple).

## Revendications

1. Indicateur d'état d'un système de roulage à plat comprenant au moins pour chaque roue une enveloppe pneumatique, un avertisseur de dégonflement et des moyens de support de la bande de roulement de l'enveloppe pneumatique en cas de dégonflement de l'enveloppe de pneumatique, notamment pour tableau de bord d'un véhicule, ledit système ayant un potentiel d'utilisation donné et comportant des moyens d'évaluation tels que, sur la base de mesures liées aux conditions d'usage dudit véhicule et/ou aux caractéristiques physiques dudit système et/ou dudit véhicule et/ou aux conditions d'environnement dudit véhicule, lesdits moyens d'évaluation calculent à un instant **t** des paramètres caractéristiques de l'état dudit système, **caractérisé en ce que** ledit indicateur d'état affiche simultanément audit instant **t** au moins :

   • le potentiel d'utilisation dudit système de roulage à plat audit instant **t** donné ;
   • l'autonomie d'usage dudit système audit instant **t** donné ; et
   • la température de l'air interne au pneumatique, liée à la sévérité des paramètres d'utilisation dudit système audit instant **t** donné.

2. Indicateur selon la revendication 1, dans lequel ledit indicateur d'état affiche en outre simultanément les valeurs maximale et minimale de l'autonomie d'usage du système audit instant **t.**

3. Indicateur selon l'une des revendications 1 et 2, dans lequel ledit potentiel est affiché graphiquement.

4. Indicateur selon l'une des revendications 1 à 3, dans lequel ladite température est affichée graphiquement.

5. Indicateur selon l'une des revendications 3 et 4, dans lequel ledit potentiel est représenté par une zone A de couleur donnée dont la surface est représentative de la valeur dudit potentiel.

6. Indicateur selon la revendication 5, dans lequel ladite zone A est séparée en deux zones A1 et A2 dont les surfaces respectives sont fonction de la valeur de ladite température.

7. Indicateur selon l'une des revendications 4 à 6, dans lequel la valeur de la température de l'air interne au pneumatique est, de plus, affichée numériquement.

8. Indicateur d'état selon l'une quelconque des revendications 1 à 7, tel qu'il comporte des moyens pour :

   • enregistrer l'autonomie d'usage souhaitée par le conducteur à un instant donné ; et
   • mettre à jour cette autonomie d'usage souhaitée par le conducteur par déduction des distances effectivement parcourues ou du temps d'usage effectif, selon le cas.

9. Indicateur selon la revendication 8, dans lequel les moyens d'évaluation et d'affichage comparent l'autonomie souhaitée et l'autonomie calculée, et transforment ces données en un affichage recommandant au conducteur la démarche à adopter pour retrouver une autonomie d'usage calculée suffisante.

10. Indicateur selon l'une des revendications 2 à 9, tel que les valeurs maximale et minimale de l'autonomie d'usage dudit système audit instant **t** sont évaluées en intégrant le potentiel d'utilisation audit instant t donné.

11. Indicateur selon l'une quelconque des revendications 2 à 10, tel que les valeurs maximale et minimale possibles de l'autonomie d'usage dudit système audit instant **t** sont évaluées en intégrant les paramètres de conduite du véhicule.

12. Indicateur selon l'une quelconque des revendications 2 à 11, dans lequel les valeurs maximale et minimale possibles de l'autonomie d'usage dudit système audit instant **t** sont évaluées en intégrant les paramètres d'environnement du véhicule.

13. Système embarqué « de contrôle et de préconisation » **caractérisé en ce qu'**il utilise au moins un indicateur d'état selon l'une quelconque des revendications 1 à 12, commandé par des moyens électroniques de mémoire et de circuits logiques, notamment un ou des algorithmes, alimentés par des informations provenant de capteurs appropriés.

**14.** Système selon la revendication 13, tel qu'il comporte un écran capable d'afficher successivement au moins deux « modes » c'est-à-dire au moins deux systèmes d'affichage différents relatifs à des fonctionnalités différentes, choisies parmi le mode « autonomie carburant », « autonomie usure des pneumatiques », « autonomie système de roulage à plat », « autonomie avant révision », « autonomie batterie » et analogue, avec une fonction d'affichage prioritaire du mode défaillant, l'affichage successif étant commandé au moins partiellement par un moyen de commande activé par le conducteur ou au moins partiellement piloté automatiquement par le système logique et sa mémoire.

**Claims**

**1.** State indicator for a run-flat system comprising at least, for each wheel, a tyre casing, a deflation warning device and means of supporting the tread of the tyre casing in the event of deflation of the tyre casing, in particular for a vehicle dashboard, the said system having a given use potential and comprising evaluation means such that, on the basis of measurements related to the conditions of use of the said vehicle and/or to the physical characteristics of the said system and/or to the said vehicle and/or to the environment conditions of the said vehicle, the said evaluation means calculate at a time **t** parameters characteristic of the state of the said system, **characterised in that** the said state indicator simultaneously displays at the said time **t** at least:

• the potential for use of the said run-flat system at the said given time **t;**
• the range of use of the said system at the said given time **t;** and
• the temperature of the internal air in the tyre, related to the severity of the parameters of use of the said system at the said given time **t.**

**2.** Indicator according to Claim 1, in which the said state indicator furthermore displays simultaneously the maximum and minimum values of the range of use of the system at the said time **t.**

**3.** Indicator according to one of Claims 1 and 2, in which the said potential is displayed graphically.

**4.** Indicator according to one of Claims 1 to 3, in which the said temperature is displayed graphically.

**5.** Indicator according to one of Claims 3 and 4, in which the said potential is represented by an area A with a given colour whose surface area represents the value of the said potential.

**6.** Indicator according to Claim 5, in which the said area A is separated into two areas A1 and A2 whose respective surface areas are a function of the value of the said temperature.

**7.** Indicator according to one of Claims 4 to 6, in which the value of the temperature of the internal air in the tyre is in addition displayed numerically.

**8.** State indicator according to any one of Claims 1 to 7, such that it comprises means for:

• recording the range of use required by the driver at a given time; and
• updating this range of use required by the driver by deducting the distances actually travelled or the actual time of use, according to the case.

**9.** Indicator according to Claim 8, in which the evaluation and display means compare the required range and the calculated range, and convert these data into a display recommending to the driver the behaviour to be adopted in order to regain a sufficient calculated range of use.

**10.** Indicator according to any one of Claims 2 to 9, such that the maximum and minimum values of the range of use of the said system at the said time t are evaluated by integrating the use potential with the said given time **t**.

**11.** Indicator according to any one of Claims 2 to 10, such that the maximum and minimum possible values of the range of use of the said system at the said time **t** are evaluated by integrating the vehicle driving parameters.

**12.** Indicator according to any one of Claims 2 to 11, in which the maximum and minimum possible values of the range of use of the said system at the said time **t** are evaluated by integrating the vehicle environment parameters.

**13.** On-board "monitoring and recommendation" system, **characterised in that** it uses at least one state indicator according to any one of Claims 1 to 12, controlled by electronic memory and logic circuit means, in particular one or more algorithms, supplied with information coming from appropriate sensors.

**14.** System according to Claim 13, such that it comprises a screen capable of successively displaying at least two "modes", that is to say at least two different display systems relating to different functionalities, chosen from amongst the "fuel range", "tyre wear range", "run-flat system range", "range before service", "battery range" modes and the like, with a function of priority display of the failed mode, the successive display being controlled at least partially by a control means activated by the driver or at least partially controlled automatically by the logic system and its memory.

**Patentansprüche**

1. Zustandsanzeiger eines Pannenlauf-Systems mit für jedes Rad mindestens einem Luftreifen, einem Druckverlust-Melder und Mitteln zum Stützen der Lauffläche des Luftreifens bei einem Druckverlust des Luftreifens, insbesondere für ein Armaturenbrett eines Fahrzeugs, wobei das System ein gegebenes Benutzungspotenzial besitzt und Bewertungsmittel aufweist, die auf der Basis von Messungen im Zusammenhang mit den Nutzungsbedingungen des Fahrzeugs und/oder den physischen Eigenschaften des Systems und/oder des Fahrzeugs und/oder den Umgebungsbedingungen des Fahrzeugs in einem Moment t charakteristische Parameter für den Zustand des Systems berechnen, **dadurch gekennzeichnet, dass** der Zustandsanzeiger zum Zeitpunkt t mindestens Folgendes anzeigt:

- das Benutzungspotenzial des Pannenlauf-Systems zum gegebenen Zeitpunkt t,
- die Benutzungsreichweite des Systems zum gegebenen Zeitpunkt t und
- die Temperatur der Luft im Reifen, die mit der Härte der Benutzungsparameter des Systems zum gegebenen Zeitpunkt t zusammenhängt.

2. Anzeiger nach Anspruch 1, bei dem der Zustandsanzeiger darüber hinaus gleichzeitig den maximalen und minimalen Wert der Benutzungsreichweite des Systems zum Zeitpunkt t anzeigt.

3. Anzeiger nach einem der Ansprüche 1 oder 2, bei dem das Potenzial grafisch angezeigt wird.

4. Anzeiger nach einem der Ansprüche 1 bis 3, bei dem die Temperatur grafisch angezeigt wird.

5. Anzeiger nach einem der Ansprüche 3 oder 4, bei dem das Potenzial durch einen Bereich A in einer bestimmten Farbe dargestellt ist, dessen Fläche für den Wert des Potenzials repräsentativ ist.

6. Anzeiger nach Anspruch 5, bei dem der Bereich A in zwei Bereiche A1 und A2 unterteilt ist, deren Flächen vom Wert der Temperatur abhängen.

7. Anzeiger nach einem der Ansprüche 4 bis 6, bei dem der Wert der Temperatur der Luft im Reifen außerdem numerisch angezeigt wird.

8. Zustandsanzeiger nach einem der Ansprüche 1 bis 7, der Mittel aufweist zum

- Speichern der vom Fahrer zu einem gegebenen Zeitpunkt gewünschten Benutzungsreichweite und
- Aktualisieren der vom Fahrer gewünschten Benutzungsreichweite durch Abzug der tatsächlich zurückgelegten Strecken oder der tatsächlichen Benutzungszeit, je nach Fall.

9. Anzeiger nach Anspruch 8, bei dem die Bewertungs- und Anzeigemittel die gewünschte und die berechnete Reichweite miteinander vergleichen und diese Daten in eine Anzeige verwandeln, die dem Fahrer empfiehlt, wie er vorgehen muss, um eine ausreichende berechnete Benutzungsreichweite zu erhalten.

10. Anzeiger nach einem der Ansprüche 2 bis 9, bei dem der maximale und minimale Wert für die Benutzungsreichweite des Systems zum Zeitpunkt t bewertet werden, wobei das Benutzungspotenzial zum gegebenen Zeitpunkt t einbezogen wird.

11. Anzeiger nach einem der Ansprüche 2 bis 10, bei dem der mögliche maximale und minimale Wert für die Benutzungsreichweite des Systems zum Zeitpunkt t bewertet werden, wobei die Parameter der Fahrweise einbezogen werden.

12. Anzeiger nach einem der Ansprüche 2 bis 11, bei dem der mögliche maximale und minimale Wert für die Benutzungsreichweite des Systems zum Zeitpunkt t bewertet werden, wobei die Parameter der Umgebung des Fahrzeugs einbezogen werden.

13. Bordsystem "zur Kontrolle und Empfehlung", **dadurch gekennzeichnet, dass** es mindestens einen Zustandsanzeiger nach einem der Ansprüche 1 bis 12 einsetzt, der von elektronischen Speichermitteln und logischen Schaltkreisen, insbesondere einem oder mehreren Algorithmen, die mit Informationen von geeigneten Sensoren gespeist werden, gesteuert wird.

14. System nach Anspruch 13 mit einem Bildschirm, der nacheinander mindestens zwei "Modi" anzeigen kann, das heißt mindestens zwei verschiedene Anzeigesysteme, die verschiedene Funktionalitäten betreffen, welche aus dem Modus "Reichweite Kraftstoff", "Reichweite Verschleiß der Reifen", "Reichweite Pannenlauf-System", "Reichweite vor Inspektion", "Batterie-Reichweite" und Ähnliches gewählt sind, mit einer Funktion zum Reichweite" und Ähnliches gewählt sind, mit einer Funktion zum vorrangigen Anzeigen des schwachen Modus, wobei die sukzessive Anzeige zumindest teilweise durch ein vom Fahrer betätigtes Steuermittel oder zumindest teilweise automatisch vom logischen System und seinem Speicher gesteuert wird.

1

Autonomie:
500 kms

Temp:
50°

A

## FIG. 1A

1

A1          A2

# FIG. 1B

**FIG. 2A**

**FIG. 2B**

**FIG. 2**

EP 1 499 509 B1

FIG. 3A

FIG. 3B

FIG. 3

**FIG. 4A**

70

80

500

**PAX System**

OBJ ⭢

⭠ ACTUEL

10

500 <sup>KM</sup>

90

100

20

50

30

DÉFAILLANCE
PNEU  AV  G

PAX ENCLENCHÉ

RALENTIR  ⚠

10

0

200

1 /  |DEPART|

## FIG. 4B

200

PAX System

150

OBJ ⟶

⟵ ACTUEL

130

10

80

20

100

50

90

ATTENTION
RÉDUIRE
VITESSE

⚠

80

10

0

2 / + 60 MIN

FIG. 4C

**FIG. 4D**

106

PAX System

├ 100

85

OBJ

ACTUEL

61

├ 50

ATTENTION
RÉDUIRE
VITESSE

⚠

◄ ►

├ 10

├ 0

50

4 / │ **120 MIN** │

# FIG. 4E

PAX System

51

31

OBJ →

◄ ←ACTUEL

39

STOP

ATTENTION
APPROCHE
FIN DE
DURÉE PAX
RALENTIR

◄

—100

—50

—10

—0

30

5 / | 2 H 30 MIN |

## FIG. 4F

**MODE CARBURANT**

# FIG. 4G

21000

RÉVISION

18 000

OBJ

ACTUEL

16 260

100

50

10

0

14230

MODE RÉVISION

FIG. 4H

Fig. 5